# EUROPÄISCHE PATENTSCHRIFT

(11) **EP 1 160 535 B1**
(45) Veröffentlichungstag und Bekanntmachung des Hinweises auf die Patenterteilung: **08.09.2004**
(21) Anmeldenummer: 01112334.6
(22) Anmeldetag: 19.05.2001
(51) Int. Cl.: F42C 13/02, G01S 17/10

(54) **Optronischer Zünder**
Opto-electronic fuze
Fusée optoéléctronique

(30) Priorität: 02.06.2000 DE 10027469
(43) Veröffentlichungstag der Anmeldung: 05.12.2001
(73) Patentinhaber: Diehl Munitionssysteme GmbH & Co. KG, 90552 Röthenbach (DE)
(72) Erfinder: Ganghofer, Andreas, 90471 Nürnberg (DE)
(74) Vertreter: Diehl Patentabteilung

(56) Entgegenhaltungen:
- DE-A- 2 456 162
- DE-A- 3 821 218
- US-A- 4 651 647
- US-A- 4 853 543
- US-A- 4 859 054

## Beschreibung

Die Erfindung betrifft einen optronischen Zünder gemäß dem Anspruch 1.

Aus der DE 24 56 162 C2 ist ein Geschoßzünder mit einer nach dem Basisprinzip arbeitenden optoelektronischen Meßeinrichtung bekannt, die bei Erreichen einer bestimmten Entfernung zwischen dem Geschoß und einer Zieloberfläche ein Signal an eine Auswerteschaltung abgibt, wobei die Meßeinrichtung einen durch eine Linse optische Impulse mit einer lmpulsfolgefrequenz emittierenden Sender und einen über eine weitere Linse von der Oberfläche zurückgesteuerte Anteile dieser optischen Impulse aufnehmenden, in bestimmtem Abstand vom Sender angeordneten Empfänger mit einem auf die Impulsfolgefrequenz abgestimmten schmalbandigen Filter und Empfangsverstärker aufweist. Zur Beseitigung der Auswirkungen von schaltungsbedingten Frequenzabweichungen ist zwischen das Bandbaßfilter und den Sender eine Regelschaltung geschaltet, durch welche die Impulsfolgefrequenz des Senders der Mittelfrequenz des Bandbaßfilters nachgeführt ist. Das Eingangssignal der Regelschaltung ist ein aus dem Rauschpegel des Empfangsverstärkers durch das Bandbaßfilter ausgefiltertes Signal.

Ein optischer Abstandssensor für einen Geschoßzünder, der nach dem Impuls-Rückstrahlprinzip arbeitet und im Empfangszweig in Reihe einen Verstärker, eine im Sendeimpuls taktgeöffnete Torschaltung, eine integrierende Kondensatorschaltung und einen Schwellwertschalter aufweist, ist aus der DE 26 08 066 C2 bekannt. Dort ist im Empfangszweig vor der Torschaltung ein Hochbaß angeordnet, dessen Grenzfrequenz geringfügig unterhalb der Sendeimpulsfolgefrequenz liegt. Die integrierende Kondensatorschaltung dient dazu, positive und negative Signalanteile entsprechend ihrem Vorzeichen aufzusummieren.

Ein optronischer Zünder ist beispielsweise auch aus der DE 39 27 819 C2 bekannt.

Für manche, vorwiegend mit einer intelligenten Sensorik ausgestattete Waffensysteme, kann es wünschenswert sein, den Gefechtskopf in einer vom jeweiligen Zieltyp abhängigen optimalen Wirkentfernung zu zünden. Die zu diesem Zwecke einzusetzenden optronischen Zünder müssen dem Waffensystem mehr als eine Zündentfernung anbieten können. Bevorzugt ist es, wenn das Waffensystem die jeweils gewünschte Zündentfernung kurzfristig stufenlos frei programmieren kann. Das bedeutet, daß die Zünder keine fest eingestellte Zündentfernung besitzen dürfen und einen großen Signaldynamikbereich handhaben können müssen.

Üblicherweise erfolgt dagegen die Zündauslösung bei einem optoelektronischen Abstandszünder durch einen Vergleich der Echolaufzeit mit einer fest eingestellten Referenzzeit, die beispielsweise durch eine vorgegebene Phasenverschiebung oder über eine Verzögerungsleitung gewonnen wird, wobei wegen der konstant vorgegebenen Ansprechentfernung eine laufzeitabhängige Verstärkung der Echosignale im Empfangskanal üblicherweise verzichtbar ist. Ein Beispiel für diese Schaltungstechnik stellt die US-A-4,859,054 dar. Eine Laserdiode wird zur Abgabe eines Sendeimpulses angeregt, aus dem ein Referenzsignal abgespalten und über einen Lichtleiter als Verzögerungsleitung an eine Torschaltung gelegt wird. Der zweite Eingang dieser Torschaltung ist vom aus dem Zielecho herrührenden Empfangssignal beaufschlagt, sofern das eine vorgegebene Ansprechschwelle überschreitet. Bei zeitlichem Zusammentreffen dieser beiden Eingangssignale wird das Zündkommando an den Gefechtskopf initiiert. Eine Optimierung des Zündabstandes in Abhängigkeit von einer durch ihre Reflektivität gekennzeichneten Zielklasse ist mit einer derartigen Zündschaltung nicht realisierbar.

Das ist aber auch nicht dadurch realisierbar, die gattungsfremde Publikation US-A-4,853,543 zusätzlich in Betracht zu ziehen. Denn dort geht es darum, von einem in möglichst konstanter Höhe über dem Boden operierenden Flugzeug aus durch Laserbestrahlung des Bodens mit einer mittleren Wellenlänge, die angenähert gleich der atomistischen Absorptionslinie eines interessierenden Spurengases ist, im Wege der optischen Differenz-Absorptionstechniken Erkenntnisse über Lagerstätten von Bodenschätzen oder Undichtigkeiten von Gasleitungen zu gewinnen. Um für die Intensitätsmessung über der Absorptionsfrequenz eine konstante Messhöhe einzuhalten, wird ein digitaler Laserhöhenmesser eingesetzt, der einen Analog-Digital-Umsetzer für das Ausgangssignal eines Foto-Multipliers für die optische Absorptionsmessung triggert. Das sind aparative Aspekte, die für eine Optimierung des Zündabstandes bei der Annäherung des Gefechtskopfes an ein zu bekämpfendes Ziel gerade nicht verwertbar sind, weil sie nicht einen konstanten Abstand, sondern eine Annäherung an den Reflektor zum Ziele haben.

Aber auch ein einstellbarer optoelektronischer Annäherungszünder gemäß US-A-4,651,647 führt hier nicht zum gewünschten Erfolg. Denn dessen Funktion beruht darauf, entsprechend dem gegebenen Wirkbereich des Gefechtskopfes einen Zielentfemungsbereich fest vorzugeben, außerhalb dessen keine Zielechosignale berücksichtigt werden, weshalb auch keine entfernungsabhängige, sondern eine vom Störpegel abhängige automatische Verstärkungssteuerung vorgesehen ist. Das Zündsignal wird ausgelöst, wenn ein Zähler feststellt, dass eine vorgegebene Anzahl von Echoimpulsen aus der vorgegebenen Zielentfernung eingetroffen ist. Auch aus solchen Kriterien ist, selbst nachträglich, kein Hinweis darauf entnehmbar, die in Hinblick auf unterschiedliche, durch ihre Reflektoreigenschaften unterscheidbare Zielklassen optimierte Zündauslöseentfernung im Zuge der Zielannäherung zu adaptieren, also die Probleme zu lösen, die mit einer von der Zündauslöseentfernung abhängigen hohen Signaldynamik und einer entsprechend hohen Dynamik der Zielentfernungsadaption einhergehen.

Der Erfindung liegt die Aufgabe zugrunde, einen optronischen Zünder der eingangs genannten Art zu schaffen, bei welchem die jeweils gewünschte Zündentfernung kurzfristig stufenlos frei programmierbar ist, wobei ein sehr großer Signaldynamikbereich handhabbar ist.

Diese Aufgabe wird erfindungsgemäß durch die Merkmale des Anspruches 1 gelöst. Bevorzugte Weiterbildungen des erfindungsgemäßen optronischen Zünders sind in den Unteransprüchen gekennzeichnet.

Bei dem erfindungsgemäßen optronischen Zünder erfolgt die Zündauslösung nicht durch einen Vergleich der Echolaufzeit mit einer fest vorgegebenen Referenzzeit, wie beispielsweise durch Delayline oder durch Phasenverschiebung, sondern durch eine echte stufenlose Zeitmessung. Dabei wird die Echolaufzeit mit einem Zeit-Digitalwandler gemessen. Hierfür, d.h. als Zeit-Digitalwandler, bieten sich beispielsweise schnelle Zähler an. Eine andere Möglichkeit besteht darin, Bauteile anzuwenden, die mit einer Addition kleinster Gatterdurchlaufzeiten arbeiten. Die Zündauslösung wird erfindungsgemäß durch einen Vergleich von jeweils aktuellem Zählerstand und dem programmierten Zählerstand bewirkt. Um die bei einem variablen Entfernungsbereich auftretende große Signaldynamik verarbeiten zu können, ist es bevorzugt, wenn in die Signalverarbeitungskette vor dem Zeit-Digitalwandler ein Variable Gain Amplifier (VGA) eingefügt ist. Der VGA ist dazu in der Lage, die Entfernungsabhängigkeit des Signales zu kompensieren, indem aus der aktuellen Zeitmessung ein geeigneter Verstärkungsfaktor abgeleitet wird. Hierdurch wird in vorteilhafter Weise erreicht, daß die Signalauswertung nur den Dynamikbereich der Zielreflektivität verarbeiten können muß.

Der optronischer Zünder für den Gefechtskopf eines mit einer intelligenten Sensorik ausgestatteten Waffensystemes arbeitet also nach dem Pulslaufzeitverfahren und führt eine Echo-Laufzeitmessung durch. Um bei dem Waffensystem die gewünschte Zündentfernung kurzfristig stufenlos frei programmieren und einen großen Signaldynamikbereich handhaben zu können, ist zur Messung der Echo-Laufzeit ein Zeit-Digitalwandler in Verbindung mit einem vorgeschalteten VGA vorgesehen, bei dem es sich beispielsweise um einen schnellen Zähler oder um Bausteine handelt, die mit einer Addition kleinster Gatterdurchlaufzeiten arbeiten.

Die mit der Erfindung erzielten Vorteile bestehen darin, daß der mit dem optronischen Zünder kombinierte Gefechtskopf zieladaptiv gezündet werden kann, daß sich ein Stand-off-Universalzünder realisieren läßt, der durch eine Programmierung an jedem beliebigen Gefechtskopf ohne Elektronikänderung adaptierbar ist, und daß sich ein Stand-off-Universalzünder realisieren läßt, der durch eine Programmierung an jede beliebige Einbauposition des Waffensystemes ohne Elektronikänderung adaptierbar ist. In diesem zuletzt erwähnten Zusammenhang wird beispielsweise auf die DE 38 21 218 A1 Bezug genommen, die ein Überflugprojektil zum Bekämpfen eines aus einer niedrigen Suchflugbahn heraus detektierten Zielobjektes mittels eines Gefechtskopfes an Bord des Überflugprojektiles beschreibt.

## Patentansprüche

1. Optronischer Stand-Off-Zünder mit einer Einrichtung zum Messen der Laufzeit zwischen ausgesendetem und am Ziel reflektiert empfangenem Impuls,
**dadurch gekennzeichnet,**
**daß** die Messeinrichtung ein schneller Zähler mit umschaltbarer Zählerstandsabfrage ist, dem ein laufzeitabhängig angesteuerter Verstärker vorgeschaltet ist.

2. Zünder nach Anspruch 1,
**dadurch gekennzeichnet,**
**daß** die Funktion des schnellen Zählers durch Addition kleinster Gatter-Durchlaufzeiten realisiert ist.

## Claims

1. Optronic stand-off firing device with a device for measurement of the delay between the impulse sent, reflected from the target and received,
**characterised in that**
the measuring device is a fast counter with switchable interrogation of the state of the counter, ahead of which a driven amplifier is connected, which is independent of the delay.

2. A firing device according to Claim 1
**characterised in that**
the function of a fast counter is fulfilled by the addition of least gate throughput times.

## Revendications

1. Allumeur optronique à distance comportant un dispositif de mesure du temps de parcours d'impulsions entre l'émission et la réception de leur réflexion sur la cible,
**caractérisé en ce que**,
le dispositif de mesure est un compteur rapide avec interrogation sur l'état du compteur commutable, en amont duquel est monté un amplificateur commendé en fonction du temps de parcours.

2. Allumeur selon la revendication 1, **caractérisé en ce que** la fonction du compteur rapide est réalisée par adition de très petits temps de parcours de grille.
